# EUROPEAN PATENT APPLICATION

(11) **EP 3 428 494 A1**
(43) Date of publication of application: **16.01.2019**
(21) Application number: 18183072.0
(22) Date of filing: 12.07.2018
(51) Int. Cl.: F16K 31/12, F16K 37/00

(54) **USING SHORT-RANGE WIRELESS CONNECTIVITY TO TRANSMIT DATA FROM A VALVE ASSEMBLY**

(30) Priority: 14.07.2017 US 201715649748
(71) Applicant: Dresser, LLC, Addison, TX 75001 (US)
(72) Inventor: HEBERT, Mark Edmund, Houston, TX Texas 77041 (US); LU, Lei, Houston, TX Texas 77041 (US); PODPALY, Anatoly, Houston, TX Texas 77041 (US)
(74) Representative: Illingworth-Law, William Illingworth

(57) **Abstract**

A valve assembly that is configured to wirelessly transmit data using near-field communication protocols. The embodiments may include a passive, NFC-enabled device disposed inside of a controller (or "valve positioner"). This NFC-enabled device can operate as a communication "port" to allow data exchange with a handheld computing device, like a smartphone or tablet. This feature can afford end users (e.g., technicians) ready access to data on the valve assembly via the handheld computing device.

## Description

### BACKGROUND

Flow controls are important in many industries. Whether found on process lines, gas distribution networks, or any system that carries flowing material, flow devices like valve assemblies are vital to regulate material flow within set parameters. Or, in case of problems, the valve assembly can shut-off flow altogether.

Valve assemblies often leverage mechanical mechanisms to regulate flow. These mechanisms may include an actuator that couples with a closure member via a stem. The closure member may embody a plug, a ball, a butterfly valve, and/or like implement that can contact a seat to prevent flow. A sensing mechanism may be useful to monitor the position of the closure member relative to a seat. This sensing mechanism can have a position sensor and a mechanical linkage that couples the position sensor with the stem or other structure that moves in concert with the closure member. In some examples, the actuator includes a pneumatic actuator that converts energy (e.g., compressed air) into mechanical motion to cause the closure member to move between an opened position, a partially opened position, and a closed position.

Valve assemblies may also include computing components that automate operation of the device. These components may integrate as part of a "controller" or "valve positioner." During operation, the valve positioner receives and processes a control signal from a process control system (also "distributed control system" or "DCS system"). The control signal may define operating parameters for the valve assembly. These operating parameters may set an appropriate flow of material through the valve assembly and into the process line. The valve positioner can translate the operating parameters, often in combination with the output from the position sensor, to regulate instrument gas into the actuator. The instrument gas may pressurize (or de-pressurize) the actuator in a way that moves the valve stem and, in turn, locates the closure member in position relative to the seat to coincide with the operating parameters.

### SUMMARY

The subject matter disclosed herein relates to improvements that provide seamless data exchange between a valve assembly and a remote device. Of particular interest are embodiments that leverage wireless data transmission technology, like near-field communication or NFC, to allow an end user (e.g., technician) to interact with the device using a smartphone or tablet (or, generally, a remote or handheld computing device). This concept makes use of computing power available on the remote computing device, which is typically better suited to support a user interface or other rich, interactive environment, as compared to the valve positioner on the valve assembly. The embodiments may also do away with any wired data connection between the valve positioner and the handheld computing device. This feature can alleviate safety concerns, as well as to ensure integrity of the valve positioner, because the technician no longer needs to remove any parts (e.g., covers) that would normally facilitate data access by way of physical electronics or connectors on the valve positioner.

### DRAWINGS

Reference is now made briefly to the accompanying drawings, in which:
FIG. 1 depicts a schematic diagram of an exemplary embodiment of a data exchange device in use as part of a flow control, described here as a valve assembly;
FIG. 2 depicts a schematic diagram of the valve assembly of FIG. 1 including aspects of a controller that manages operation of the device;
FIG. 3 depicts a schematic diagram of an example of the controller of FIG. 2;
FIG. 4 depicts a schematic diagram of an example of a network of components that includes the valve assembly of FIG. 1;
FIG. 5 depicts a perspective view of exemplary structure for the valve assembly of FIG. 1;
FIG. 6 depicts an exploded assembly view of the controller in FIG. 5; and
FIG. 7 depicts a schematic block diagram of an exemplary valve positioner coupled with an exemplary near-field communication interface device.

Where applicable, like reference characters designate identical or corresponding components and units throughout the several views, which are not to scale unless otherwise indicated. The embodiments disclosed herein may include elements that appear in one or more of the several views or in combinations of the several views. Moreover, methods are exemplary only and may be modified by, for example, reordering, adding, removing, and/or altering the individual stages.

### DETAILED DESCRIPTION

The discussion that follows describes improvements to enhance flow control hardware to wirelessly exchange data. The improvements are discussed in context of a valve assembly, but the subject matter may apply to other devices, including many of those in the flow control space (e.g., pressure regulators, actuators, etc.). Valve assemblies may benefit because these devices often have power limitations that frustrate design changes to incorporate relevant new technology. In this regard, the embodiments here leverage components that work within these power limitations to expand functions for wireless connectivity. Some configurations of these components may, in fact, generate or harvest energy to provide power *in situ* so as to avoid or reduce power draw on the power loop of the valve assembly. This feature may permit valve assemblies to not only wirelessly transfer new classes of data, such as for diagnostics, but also wirelessly connect into a larger system of inter-networked devices and components. Other embodiments are within the scope of this disclosure.

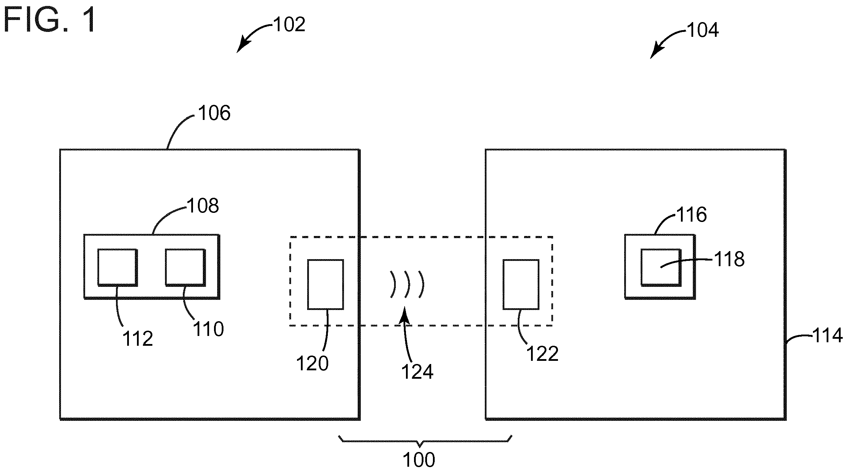

FIG. 1 depicts a schematic diagram of an exemplary embodiment of a data exchange device 100 that might be used for this purpose. This embodiment can be configured to facilitate data exchange between a flow control 102 and a remote device 104. The flow control 102 may be configured as a valve assembly 106 that regulates material flow, for example, through a pipe. The valve assembly 106 may include an integrated interface 108 having an on-board display 110 and on-board keyboard 112 (typically with two or three pushbuttons). The remote device 104 may embody a handheld computing device 114 with a display 116 that can render a user interface 118.

Examples of the handheld computing device 114 may embody a smartphone, a tablet, or a laptop computer. Wearables like watches and glasses may also suffice. As shown, the data exchange device 100 may have a pair of exchange components (e.g., a first exchange component 120 and a second exchange component 122), one each resident on the valve assembly 106 and the computing device 114. The exchange components 120, 122 can be configured for wireless communication via a field 124. In use, an end user (e.g., a technician) may bring the handheld computing device 114 in proximity to the valve assembly 106 to stimulate data transfer via the field 124. The technician can then utilize the user interface 118 on the display 116 to enter, access, and visualize data.

At a high level, the data exchange device 100 facilitates simple and efficient data exchange between the devices 102, 104. Its hardware, namely the exchange components 120, 122, can be configured so that the field 124 conforms with near-field communication (NFC) protocols that provide short-range wireless connectivity. In accordance with these NFC protocols, the exchange components 120, 122 may operate as a "target" and an "initiator," respectively. The initiator 122 launches the communication protocol and controls the data exchange and the target 120 responds to the requests from the initiator 122.

Use of NFC-configured hardware on the valve assembly 106 overcomes limitations that often foreclose use of energy "hungry" devices, like WIFI and mobile antennas, to enable wireless communication. For example, the first exchange component 118 draws very little power to operate as the "target." This characteristic is ideal for use within power limitations on flow controls and similar devices. These limitations may cap available power at less than 40 mW because the valve assembly 106 often finds itself as part of a larger control network, or distributed control system (DCS), that operates the device (and, generally, a process line) using protocols (e.g., 4-20 mA, FOUNDATION Fieldbuss, PROFIBUS, etc.) in this low power range. Location and design of the valve assembly and the process lines can also limit access to supplemental power like a battery (or similar "on-board" supply) or facility power (or other "off-board" power options).

The NFC-configured hardware may foreclose the need for such supplemental power anyway. Interestingly, bringing the exchange components 120, 122 in proximity to one another may allow the exchange component 120 to harvest energy from the exchange component 122. This energy may be enough to power the exchange component 120 on the valve assembly 106 so that very little to no extra power is necessary to operate this component. This feature not only addresses power limitations, but also certain drawbacks that prevail with any potential supplemental power supply. For example, battery cells are often not a viable option due to safety requirements in hazardous areas (e.g., arcing and sparking concerns). Duty cycle of the exchange component 120 (e.g., short duration, high power) may also tend to drain battery cells rather quickly. And, rechargeable battery cells might not be viable either because the prevailing power available (e.g., less than 40mW) would not likely provide sufficient power to maintain charge of the battery cell.

The NFC-configured hardware also addresses limitations with the resident integrated interface 108 available on the valve assembly 106. Practice to date has been to leverage the on-board devices 110, 112 as the primary modality for the technician to interact with the valve assembly 106. Here, however, the technician may leverage features of the user interface 118 in lieu of the on-board devices 110, 114. These features may be available via software (and like executable instructions) on the computing device 114, which itself may have expanded memory and processing to offer a rich, robust user experience via the user interface 118. This environment may provide access to functions (e.g., diagnostics) not previously available via the on-board devices 108, 110. Moreover, this user experience may offer more robust features and tools that are far superior to the typical "pushbutton" configuration of the keyboard 112 that often frustrates technicians because it is limited in functionality and particularly cumbersome and time-consuming to use in the field. Shifting operation to the computing device 114 is also beneficial because the on-board display 108 may have a dearth of usable visible space, ineffective brightness (e.g., there is often no backlighting that can frustrate reading), and insufficient operational capabilities (e.g., the on-board display 108 is often operational only to -20 °C, but the valve assembly 106 may find use in conditions with temperatures as low as -40 °C).

Further, the NFC-configured hardware can simplify certain operation and maintenance tasks on the valve assembly 108. For example, practices to date have technicians carry out local firmware updates with "hard-wired" connections that extend from the valve assembly 106 to, e.g., a laptop computer. This approach requires the technician to remove covers to properly access connection points in the valve assembly 106 for connectors (e.g., banana plugs or the like). The proposed "wireless" connection via NFC-configured hardware forecloses the need for this hard-wired approach, which itself can save time and money, not only by speeding up the update process but also avoiding common pitfalls like restrictions that prevent access to the covers due to safety concerns or process interruption.

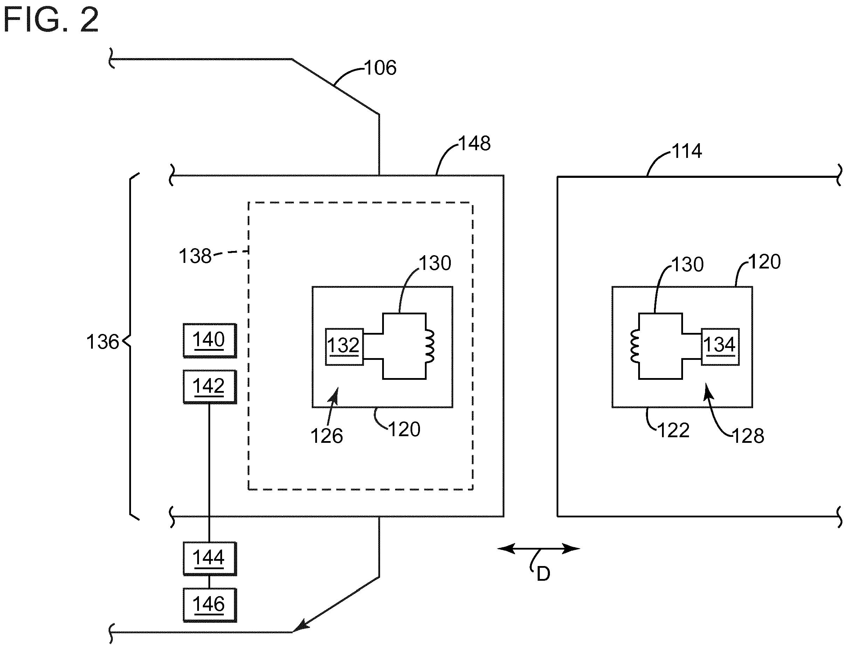

FIG. 2 depicts, schematically, the data exchange device 100 of FIG. 1 with additional details to implement the NFC-configured hardware the devices 102, 104. The exchange components 120, 122 may embody a pair of near-field communication (NFC) devices (e.g., a first NFC device 126 and a second NFC device 128). In one implementation, the NFC devices 126, 128 may include an inductive coil 130, preferably a wound coil of wire (also "winding") made of metal or conductive material. The first NFC device 126 may also include an electronic tag device 132 that, generally speaking, may be an integrated circuit embedded with a small amount of code to be read by and, under some circumstances, written to, the remote device 104. The second NFC device 128 may include a near-field communication (NFC) reader device 134 that can be configured to communicate with the tag device 128 on the valve assembly 106. Both the coil 130 and NFC reader 134 may be part of a standard configuration for smartphones and tablets for use as the remote device 104. For valve assemblies, the first NFC device 126 may integrate as part of a controller 136, or "valve positioner," that controls functions on the device. The controller 136 may include an electronics assembly 138 that can function to control one or more positioner components (e.g., a converter component 140 and a relay component 142). The positioner components 140, 142 may couple with an actuator 144 to move a valve 146. In one example, the controller 136 includes a housing 148 (also "enclosure 148") that encloses and protects the NFC device 126 and the electronics assembly 138, as well as other operative components of the controller 136, some of which are noted further below. Materials for the enclosure 148 may vary, but preference may be given to materials that are robust, durable, and allow field 126 (e.g., magnetic flux, RF waves, etc.) to pass through in strength sufficient to promote communication between devices 126, 128.

Use of the NFC devices 126, 128 may facilitate data exchange in the normal course of operation at a plant or industrial site. These operations may have a technician approach the valve assembly 106 (on a process line) to interrogate it for maintenance or other diagnostics. The technician can bring his smartphone 114 (or other "handheld" computing device) within close proximity to the valve assembly 106, measured here generally as a threshold distance D, to stimulate data exchange via the field 124. The threshold distance D may be defined in accordance with the construction of NFC devices 126, 128 and NFC protocol standards. Inductive coupling between the coils 130 can occur at distances from 0 to about 20 cm. But in practice the best distance for inductive coupling may occur from 0 to about 5 cm, so the threshold distance D may be within a range of about 0 to 5 cm for reliable communication between the target 120 and initiator 122. NFC standards provide proper RF signal format and modulation, as well as proper coding schemes for the data to be transferred on the RF signal (e.g., Manchester coding format, 10% modulation, and amplitude shift keying as the format for the NFC modulation). Depending upon the chosen coding scheme, data transfer rates may be one of 106, 212 or 424 kbps, but this is does not limit transfer in scope as other technology may be developed to increase transfer in appropriate formats.

Induction coil 130 may be configured to facilitate data exchange between the devices 126, 128 via the field 124. Care should also be taken to locate the coil 130 in position relative to the enclosure 148 so as to promote communication between the devices 126, 128. Any position should permit field 124 to readily pass through side walls of the enclosure 148. The winding may occupy as much surface area as possible within confines allowable by structure adjacent the devices 126, 128. That is, it may benefit use of the disclosed and contemplated concepts to make the coil 130 as large as possible, with as many turns as possible, given any physical limitations for the NFC device 126 on the valve assembly 106 and, to the extent possible, for the NFC device 128 on the computing device 114. In one implementation, a majority of the winding should be close to the enclosure 148, for example, not more than 10 millimeters from a side wall. It may be useful to encapsulate or conformally coat the coil 130 so as to meet safety and operational requirements.

Industry standards at the time of this writing limit the size of memory available on the tag device 132. The limitations are often 2 kilobytes (kB). The data stored on the tag device 132 can include various executable instructions or "code" that configure the tag device 132 to interact with the NFC reader 134 on the computing device 114. These instructions may configure the tag device 132 to respond to an initialization protocol when the tag device 132 is energized. The instruction may also configure the tag device 132 to complete a handshake-type protocol or sequence establishing a communication link with the NFC reader 134. This communication link may permit full transfer of user-defined data related to the flow control 102. The data stored on the tag device 132 typically is read-only in normal use, but in some implementations may be rewritable as well.

The NFC reader 134 may be configured to read from or write to the tag device 132. These configurations may embody an integrated circuit that can modulate the 13.56 MHz RF signal (e.g., field 126) that carries the data messages to the tag device 132. In practice, the NFC reader 134 may store executable instructions (e.g., computer programs, firmware, application software, etc.) that are specific to the valve assembly 106, such as graphical displays for data history, calibration, configuration, and diagnostic functions.

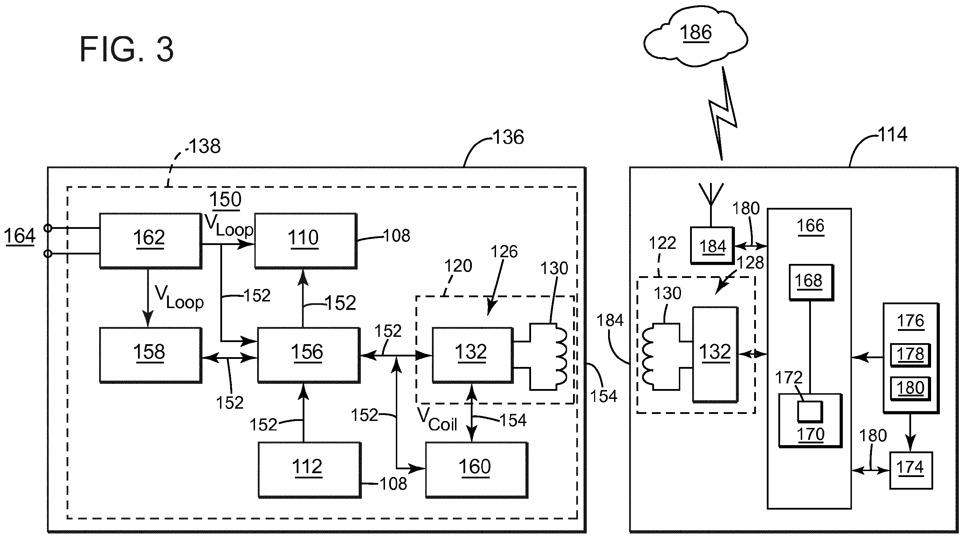

FIG. 3 depicts a schematic diagram of an exemplary topology for the controller 136. The electronics assembly 138 may have a substrate 150, like one or more printed circuit boards (PCBs). The NFC device 126 may reside on the substrate 150, although some configuration may accommodate the NFC device 126 (or other component) remotely located relative to the substrate 150. The substrate 150 may have circuitry with various computing components and a bus structure, shown here as one or more separate busses (e.g., a first buss 152 and a second buss 154). The computing components may embody discrete or solid state elements, including a main controller 156, possibly in the form of a microcontroller with fully integrated processing and memory necessary to perform operations. Sometimes this microcontroller may have functions to integrate all (or more than one) of the computing components of the electronics assembly 138. The first buss 152 may couple the main controller 156 with a position controller 158 and with the integrated interface 108 (e.g., display 110 and keyboard 112). The electronics assembly 138 may also include memory 160, possibly for use in operative association with the tag device 132 via the second buss 154. A power supply 162 may be useful to generate electrical signals (e.g., current or voltage) that power all or part of the electronics assembly 138. The power supply 162 may be configured to use input signals from a main control loop 164 that provides control signals (via the DCS) to the controller 136.

Busses 152, 154 may embody standard or proprietary communication protocols. Examples of the protocols include UART, SPI, I²C, UNI/O, 1-Wire, or one or more like serial computer busses known at the time of the present writing or developed hereinafter. In operation, the tag device 132 can be passive, meaning it is not energized by the power supply 162. Rather, the tag device 132 (and memory 160, if present) can remain powered off until energized by voltage generated in the coil 130 on the NFC device 126. In other implementations, such as when the main controller 156 is powered on, the tag device 132 may communicate directly with the main controller via the first bus 140, and the memory 160 may not be needed. Use of the separate, second buss 154, however, may serve to couple the tag device 132 with memory 160. In this way, when the NFC device 126 is energized, data and information can transmit via the second bus 154 between the tag device 134 and memory 160, even when the main controller 156 is in a 'sleep' mode or otherwise not energized or without power.

As noted herein, the integrated interface 108 can allow the technician to understand and manipulate operations on the valve assembly 106. The display 110 may be an LCD alphanumeric display useful to convey information about operation of the valve assembly 106. This information may include position, pressure, and like values related to operating parameters at the device. The keyboard 112 may embody pushbuttons and like actuatable mechanisms; however, it is possible that the display 110 may include icons that operate in lieu of or to supplement the pushbuttons. The technician can use the pushbuttons, for example, to toggle through valve operating modes or menu structure to manually perform functions to calibrate, configure, or monitor the valve assembly 106.

Memory 160 may provide additional memory storage for data on the electronics assembly 138. It may embody non-volatile random-access memory (NVRAM), which is memory that retains its information when power is turned off. NVRAM can be useful because it stores vastly larger data sets than the tag device 132 which, due to industry standards, may be limited to 32 kilobytes (kB). By way of comparison, firmware upgrades for the controller 136 can comprise about 700 kB of data.

Referring back to FIG. 3, the diagram also illustrates some exemplary topology for the computing device 114. This topology may be standardized, for example, when the computing device 114 embodies consumer electronics devices like smartphones or tablets. This disclosure does, however, contemplate implementations that require specially or custom constructed devices, potentially built to specifications that are specific in nature or purpose. In addition to the display 116, the topology may include a device controller 166 with a processor 168 and memory 170 having data 172 stored thereon. Data 172 may embody executable instructions, like software or computer programs that configure the processor 168 for functions to operate the computing device 114. The controller 166 may couple with a repository 174 like a memory or buffer that can retain data and information. The repository 174 may be set up as random access memory (RAM), read-only memory (ROM), or the like. A power supply 176 may provide electrical signals (e.g., current, voltage, etc.) to energize the computing components. The power supply 176 may include a power cell 178 that couples with a charge interface 180 that can conduct external signals into the computing circuitry. Examples of the power cell 172 include batteries, preferably rechargeable, but this is not always necessary. The charge interface 174, like a connector that can transmit one or more of a power signal and data signal. Examples of this connector may comply with universal serial bus (USB) connectors, RS-234 connectors, and other known at the time of the present writing or hereinafter developed. The connector may operate to conduct external power signals, which may be useful to recharge the power cell 178 as well as to supplement the electrical signals from the power cell 178 for use by the NFC device 128. Busses 180 may be useful to exchange signals among components of the NFC device 126. The busses 180 may embody standard or proprietary communication modalities. In one implementation, the computing device 114 may include a wireless communication device 184, such as a cellular antenna, that is useful to communicate with a network 186.

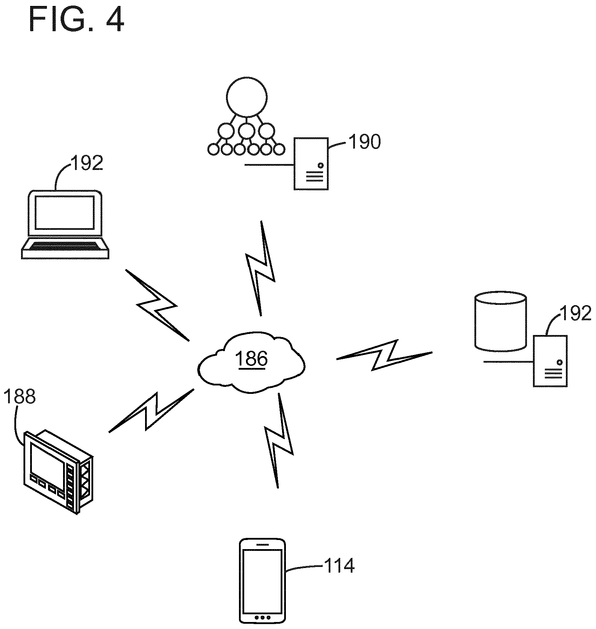

FIG. 4 shows an example of an application of the network 186. In this application, the network 186 also connects with a process controller 188, a management server 190, a terminal 192, and/or an external server 194. Other devices may also connect as well. In one implementation, the network 188 permits transfer of data, information, and signals by way of wireless protocols. Use of the NFC-configure hardware may allow the valve assembly 106 to connect (as a connected device or access point) with a larger system of inter-networked devices and components. The network 186 may find use to allow access to the valve assembly 106 from the process controller 188 or management server 190 so as to, for example, obtain diagnostic information, configure and calibrate the controller 136 from a central office, perform status checks, perform maintenance, and like tasks. Data obtained from the controller 136 could be shared with other individuals in other parts of the control plant throughout the network 186.

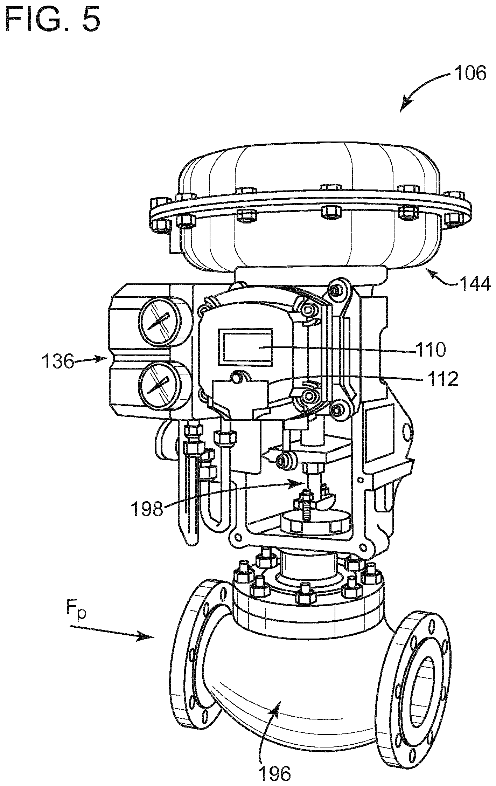

FIG. 5 depicts exemplary structure for the valve assembly 106. This structure may be useful to regulate process fluids in industrial process lines typical of industries that focus on chemical production, refining production, and resource extraction. In one implementation, the valve assembly 106 can include a body 196 with flanged, open ends. The open ends may connect with opposing sections of conduit or pipes. Bolts may be useful to secure the connection as a fluid-tight seal. As also shown the actuator 144 may couple with a valve stem 198. In this example, the valve stem 198 may extend into the body 196. The valve may reside inside of the body and hidden from view. The controller 136 may mount to the structure. As noted above, the controller 136 can regulate instrument gas to the actuator 144, which moves the valve stem 198 to change the valve and modulate a flow of process fluid Fp between the openings 106, 108.

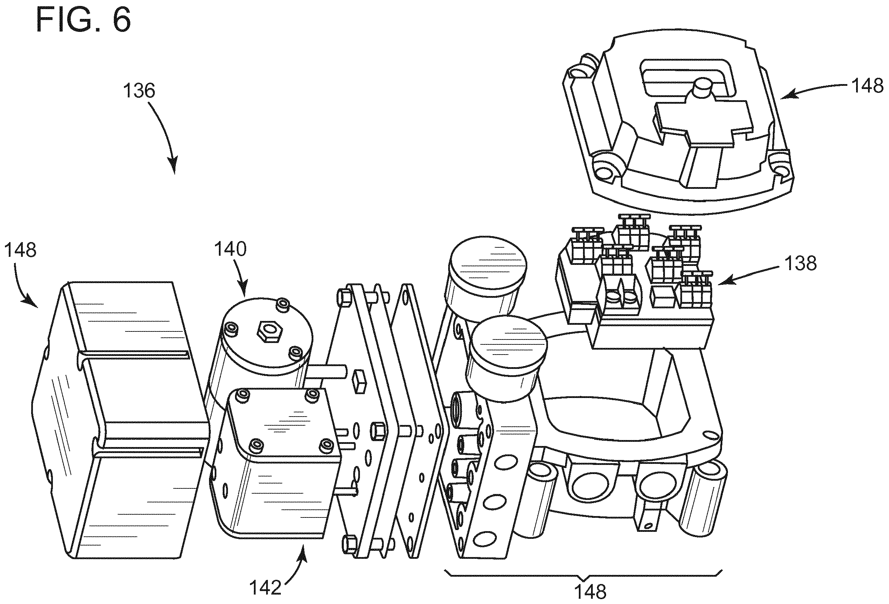

FIG. 6 depicts the controller 136 of FIG. 5 in exploded form. The positioner components 140, 142 can be configured to operate the actuator 144 (FIG. 5). The converter component 140 may embody an electro-pneumatic transducer that converts an analog voltage input signal to a linearly proportional output pressure. This device can couple with the relay component 142, for example, a pneumatic relay that utilizes the output pressure of the converter component 140. The pneumatic relay can generate a pneumatic "signal," typically instrument gas that impinges on or "excites" an actuatable part of the actuator 144, like a diaphragm or piston. Movement of the actuatable part, in turn, regulates a position of the closure member relative to the seat in the valve 146 to maintain appropriate flow of process fluid through the valve assembly 106.

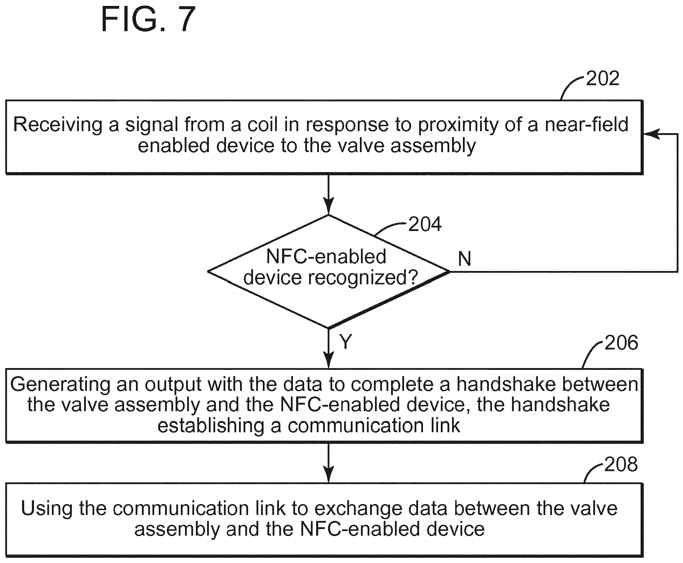

FIG. 7 depicts a flow diagram of an exemplary embodiment of a method 200 for wirelessly exchanging data with a valve assembly. The method 200 includes, at stage step 202, of receiving a signal from a coil in response to proximity of a near-field (NFC) enabled device to the valve assembly. The method 200 may also include, at stage 204, determining whether the NFC-enabled is recognized. If not, the method 200 may return to stage 202. Affirmative recognition may have the method 200 continue, at stage 206, generating an output with data to complete a handshake between the valve assembly and the NFC-enabled device, the handshake establishing a communication link. The method 200 may further include, at stage 208, using the communication link to exchange data between the valve assembly and the NFC-enabled device.

At stage 202, the method 200 receives the signal from the coil. This signal can stimulate the electronic tag device 132 so as to make any information stored thereon available to the NFC-enabled device. In practice, as voltage is applied to the coil 130 on NFC device 128, electric current flows through the windings and produces a magnetic field. Bringing the NFC device 128 in proximity to the coil 130 on the NFC device 126 (on the controller 136) and within their near-field distance (typically about 4 cm.) essentially forms an air-core transformer. This structure induces voltage and current through coil 130 on the NFC device 126, which can energize the electronic tag device 132. In one implementation, the signal may cause allow access to memory 160, whether directly by the NFC-enabled device or by the electronic tag device 132. This feature can increase the amount of data available for exchange between the proximate devices.

At stage 204, the method 200 can properly recognize the NFC-enabled device. This stage may require additional stages for implementing appropriate security measures. For example, stages for processing information that identifies the NFC-enabled device, like serial numbers, checksum valves, and like "password" related information may be important to avoid improper access. In turn, the method 200 may includes stages for processes that access data tables with entries with associate identifying formation with previously-cleared NFC-enabled device. This previously-stored data may, in turn, afford security "clearance" to avoid potential breaches or inappropriate access by non-cleared personnel or devices.

At stage 206, the method 200 generates the output for the handshake. Examples of the output may simply involve processes on-board the valve that, in turn, make certain data available to the NFC-enabled device. In one implementation, the tag device can transmit a reply with data to the NFC-enabled device that opens the communication link.

At stage 208, the method 200 can use the communication link to exchange data. Data can be transmitted from the interface device to the tag device, such as updated calibration information, or a firmware upgrade. Data can also be transmitted from the tag device to the reader module, such as diagnostic data, maintenance information, and valve status. As noted with reference to FIG. 4, the data can also be transmitted from the NFC interface device to a network.

In light of the foregoing discussion, the improvements herein allow technicians to easily interact with a valve assembly in the field. The embodiments can leverage powerful feature sets of, for example, a smartphone, to extract, view, and read data to the valve assembly. These features sets outstrip the pushbutton interface often found on the valve assembly. As noted above, the improvements may utilize hardware that resides on the valve assembly. This "valve" hardware may be compatible with NFC hardware found on many handheld devices. The "valve" hardware, however, draws little power from the valve assembly. Indeed its requirements may be well within existing power limitations available on flow controls found in process systems that utilize 4-20 mA, FOUNDATION Fieldbuss, PROFIBUS, and like industrial automation protocols. As an added benefit, the "valve" hardware may also harvest electrical energy that it can use to self-power operation, further reducing the energy "footprint" of this device.

This written description uses examples to disclose the invention, including the best mode, and also to enable any person skilled in the art to practice the invention, including making and using any devices or systems and performing any incorporated methods. An element or function recited in the singular and proceeded with the word "a" or "an" should be understood as not excluding plural said elements or functions, unless such exclusion is explicitly recited. References to "one embodiment" of the claimed invention should not be interpreted as excluding the existence of additional embodiments that also incorporate the recited features. Furthermore, the claims are but some examples that define the patentable scope of the invention. This scope may include and contemplate other examples that occur to those skilled in the art. Such other examples are intended to be within the scope of the claims if they have structural elements that do not differ from the literal language of the claims, or if they include equivalent structural elements with insubstantial differences from the literal language of the claims.

Examples appear below that include certain elements or clauses one or more of which may be combined with other elements and clauses describe embodiments contemplated within the scope and spirit of this disclosure.

Various aspects and embodiments of the present invention are defined by the following numbered clauses:
1. A valve assembly, comprising:
   a valve with a closure member that moves relative to a seat;
   an actuator coupled with the valve; and
   a controller coupled with the actuator, the controller having components to generate pneumatic signal that excites the actuator, the controller further comprising:
      a wound coil of wire,
      an electronic tag device coupled with the wound coil of wire; and
      an enclosure enclosing the wound coil of wire and the electronic tag device,
   wherein the wound coil of wire is configured in the enclosure to excite in response to a field of RF waves that permeates the enclosure to excite the wound coil of wire.
2. The valve assembly of clause 1, wherein the wound coil of wire resides within 10 mm of the enclosure.
3. The valve assembly of clause 1 or clause 2, wherein the controller comprises:
   a buss structure configured to conduct electrical signals including an electrical signal that originates from the wound coil of wire.
4. The valve assembly of any preceding clause, wherein the controller comprises:
   a buss structure configured to conduct electrical signals, the buss structure comprising a pair of buss connections, only one of which conducts an electrical signal that originates from the wound coil of wire.
5. The valve assembly of any preceding clause, wherein the controller comprises:
   a main operation control device; and
   a buss structure configured to conduct electrical signals, the buss structure comprising:
      a first buss coupled with the main operation control device and the electronic tag device;
      a second buss coupled with the electronic tag device, and
   wherein only the second buss conducts an electrical signal that originates from the wound coil of wire.
6. The valve assembly of any preceding clause, wherein the controller comprises:
   memory coupled with the electronic tag device via the second buss.
7. The valve assembly of any preceding clause, wherein the components to generate the pneumatic signal include an electro-pneumatic transducer that is configured to convert an analog voltage input signal to a linearly proportional output pressure.
8. The valve assembly of any preceding clause, wherein the components to generate the pneumatic signal include a pneumatic relay coupled with the electro-pneumatic transducer and with the actuator.
9. A valve assembly, comprising:
   a valve;
   an actuator coupled with the valve;
   a controller coupled with the actuator to modulate a pneumatic signal to the actuator; and
   a passive, NFC-enabled device disposed inside of the controller, the passive, NFC-enabled device comprising a wound coil of wire and an electronic tag device coupled with the wound coil of wire.
10. The valve assembly of any preceding clause, further comprising:
   an electronics assembly disposed in the controller, the electronics assembly comprising a buss structure configured to conduct electrical signals, the buss structure comprising a pair of buss connections, only one of which conducts an electrical signal that originates from the wound coil of wire.
11. The valve assembly of any preceding clause, further comprising:
   an electronics assembly disposed in the controller, the electronics assembly comprising a main operation control device and a buss structure configured to conduct electrical signals, the buss structure comprising:
      a first buss coupled with the main operation control device and the electronic tag device;
      a second buss coupled with the electronic tag device, and
   wherein only the second buss conducts an electrical signal that originates from the wound coil of wire.
12. The valve assembly of any preceding clause, further comprising:
   an electronics assembly disposed in the controller, the electronics assembly comprising memory and a buss structure configured to conduct electrical signals, the buss structure comprising:
      a first buss coupled with the electronic tag device;
      a second buss coupled with the memory and the electronic tag device, and
   wherein only the second buss conducts an electrical signal that originates from the wound coil of wire.
13. The valve assembly of any preceding clause, wherein the controller comprises components to generate the pneumatic signal.
14. The valve assembly of any preceding clause, further comprising:
   an electro-pneumatic transducer disposed in the controller to convert an analog voltage input signal to a linearly proportional output pressure.
15. The valve assembly of any preceding clause, further comprising:
   a pneumatic relay disposed in the controller and coupled with the electro-pneumatic transducer and with the actuator to generate the pneumatic signal.
16. A controller, comprising:
   an electro-pneumatic transducer that is configured to convert an analog voltage input signal to a linearly proportional output pressure;
   a pneumatic relay coupled with the electro-pneumatic transducer;
   an NFC device comprising a wound coil of wire and an electronic tag device coupled with the wound coil of wire, and
   an enclosure enclosing the wound coil of wire and the electronic tag device,
   wherein the wound coil of wire resides proximate the enclosure to allow a field of RF waves that permeates the enclosure to excite the wound coil of wire.
17. The controller of any preceding clause, further comprising:
   a buss structure configured to conduct electrical signals including an electrical signal that originates from the wound coil of wire
18. The controller of any preceding clause, further comprising:
   a buss structure configured to conduct electrical signals, the buss structure comprising a pair of buss connections, only one of which conducts an electrical signal that originates from the wound coil of wire.
19. The controller of any preceding clause, further comprising:
   a main operation control device;
   memory; and
   a buss structure configure to couple the NFC device with the main operation control device and the memory to permit NFC device to access data stored on the memory in lieu of power on the main operation control device.
20. The controller of any preceding clause, wherein the buss structure comprises:
   a first buss the coupling electronic tag device with the main operation control device; and
   a second buss coupling the electronic tag device with the memory,
   wherein the second buss conducts an electrical signal that originates from the wound coil of wire.

## Claims

1. A valve assembly (106), comprising:
a valve (146) with a closure member that moves relative to a seat;
an actuator (144) coupled with the valve (146); and
a controller (136) coupled with the actuator (144), the controller (136) having components to generate a pneumatic signal that excites the actuator (144), the controller (136) further comprising:
a wound coil of wire (130),
an electronic tag device (132) coupled with the wound coil of wire (130); and
an enclosure (148) enclosing the wound coil of wire (130) and the electronic tag device (132),
wherein the wound coil of wire (130) is configured in the enclosure (148) to excite in response to a field of RF waves that permeates the enclosure (148) to excite the wound coil of wire (130).

2. The valve assembly (106) of claim 1, wherein the wound coil of wire (130) resides within 10 mm of the enclosure (148).

3. The valve assembly (106) of claim 1 or claim 2, wherein the controller (136) comprises:
a buss structure (152, 154) configured to conduct electrical signals including an electrical signal that originates from the wound coil of wire (130).

4. The valve assembly (106) of any preceding claim, wherein the controller (136) comprises:
a buss structure (152, 154) configured to conduct electrical signals, the buss structure (152, 154) comprising a pair of buss connections, only one of which conducts an electrical signal that originates from the wound coil of wire (130).

5. The valve assembly (106) of any preceding claim, wherein the controller (136) comprises:
a main operation control device (156); and
a buss structure (152, 156) configured to conduct electrical signals, the buss structure (152, 156) comprising:
a first buss (152) coupled with the main operation control device (156) and the electronic tag device (132);
a second buss (154) coupled with the electronic tag device (132), and
wherein only the second buss (154) conducts an electrical signal that originates from the wound coil of wire (130).

6. The valve assembly (106) of any preceding claim, wherein the controller (136) comprises:
memory (170) coupled with the electronic tag device (132) via the second buss (154).

7. The valve assembly (106) of any preceding claim, wherein the components to generate the pneumatic signal include an electro-pneumatic transducer (140) that is configured to convert an analog voltage input signal to a linearly proportional output pressure.

8. The valve assembly (106) of any preceding claim, wherein the components to generate the pneumatic signal include a pneumatic relay (142) coupled with the electro-pneumatic transducer and with the actuator (144).

9. A valve assembly (106), comprising:
a valve (144);
an actuator (146) coupled with the valve (144);
a controller (136) coupled with the actuator (146) to modulate a pneumatic signal to the actuator (146); and
a passive, NFC-enabled device (126) disposed inside of the controller (136), the passive, NFC-enabled device (126) comprising a wound coil of wire (130) and an electronic tag device (132) coupled with the wound coil of wire (130).

10. The valve assembly (106) of claim 9, further comprising:
an electronics assembly (138) disposed in the controller (136), the electronics assembly (138) comprising a buss structure (152, 14) configured to conduct electrical signals, the buss structure (152, 154) comprising a pair of buss connections, only one of which conducts an electrical signal that originates from the wound coil of wire (130).

11. The valve assembly of claim 9 or claim 10, further comprising:
an electronics assembly disposed in the controller, the electronics assembly comprising a main operation control device and a buss structure configured to conduct electrical signals, the buss structure comprising:
a first buss coupled with the main operation control device and the electronic tag device;
a second buss coupled with the electronic tag device, and
wherein only the second buss conducts an electrical signal that originates from the wound coil of wire.

12. The valve assembly of any of claims 9 to 11, further comprising:
an electronics assembly disposed in the controller, the electronics assembly comprising memory and a buss structure configured to conduct electrical signals, the buss structure comprising:
a first buss coupled with the electronic tag device;
a second buss coupled with the memory and the electronic tag device,
and
wherein only the second buss conducts an electrical signal that originates from the wound coil of wire.

13. The valve assembly of any claims 9 to 12, wherein the controller comprises components to generate the pneumatic signal.

14. The valve assembly of any of claims 9 to 13, further comprising:
an electro-pneumatic transducer disposed in the controller to convert an analog voltage input signal to a linearly proportional output pressure.

15. A controller, comprising:
an electro-pneumatic transducer that is configured to convert an analog voltage input signal to a linearly proportional output pressure;
a pneumatic relay coupled with the electro-pneumatic transducer;
an NFC device comprising a wound coil of wire and an electronic tag device coupled with the wound coil of wire, and
an enclosure enclosing the wound coil of wire and the electronic tag device,
wherein the wound coil of wire resides proximate the enclosure to allow a field of RF waves that permeates the enclosure to excite the wound coil of wire.
